# EUROPEAN PATENT SPECIFICATION

(11) **EP 3 260 882 B1**
(45) Date of publication and mention of the grant of the patent: **27.03.2019**
(21) Application number: 17171908.1
(22) Date of filing: 19.05.2017
(51) Int. Cl.: G01S 13/86, G01S 13/42, G01S 13/93, G01S 7/40

(54) **RADAR APPARATUS MOUNTED ON MOVING BODY AND AZIMUTH ANGLE CORRECTION METHOD FOR USE IN RADAR APPARATUS MOUNTED ON MOVING BODY**
AUF EINEM BEWEGTEN KÖRPER MONTIERTE RADARVORRICHTUNG UND AZIMUTWINKELKORREKTURVERFAHREN ZUR VERWENDUNG EINER AUF EINEM BEWEGTEN KÖRPER MONTIERTEN RADARVORRICHTUNG
APPAREIL RADAR MONTÉ SUR UN CORPS MOBILE ET PROCÉDÉ DE CORRECTION D'ANGLE D'AZIMUT DESTINÉ À ÊTRE UTILISÉ DANS UN APPAREIL RADAR MONTÉ SUR UN CORPS MOBILE

(30) Priority: 31.05.2016 JP 2016108975
(43) Date of publication of application: 27.12.2017
(73) Proprietor: Panasonic Intellectual Property Management Co., Ltd., Osaka-shi, Osaka 540-6207 (JP)
(72) Inventor: KANEMARU, Masaki, Osaka-shi, Osaka 540-6207 (JP); TANAKA, Hiroshi, Osaka-shi, Osaka 540-6207 (JP)
(74) Representative: Grünecker Patent- und Rechtsanwälte PartG mbB

(56) References cited:
- US-A- 4 489 322
- US-A- 5 977 906
- US-A1- 2012 194 379
- US-A1- 2013 088 382

## Description

### BACKGROUND

### 1. Technical Field

The present disclosure relates to a radar apparatus mounted on a moving body and azimuth angle correction method for use in a radar apparatus mounted on a moving body.

### 2. Description of the Related Art

Radar apparatuses mounted on, for example, vehicles (examples of a moving body) have been developed. The radar apparatus detects the relative distance, the azimuth angle, and the relative speed of a target (for example, a vehicle in front, an oncoming vehicle, a pedestrian, or a roadside fixed object) by scanning the periphery of the moving body with a radar signal. The relative distance, the azimuth angle, and the relative speed of the target detected by the radar apparatus are used by, for example, a vehicle control system to perform various types of control (for example, control to cause the vehicle to follow the vehicle in front and control to avoid collision with an obstacle on the road surface).

In such a radar apparatus, an azimuth angle error may occur between the azimuth angle of the target detected by the radar apparatus and the actual azimuth angle of the target (hereinafter referred to as the "true value of the azimuth angle"). An azimuth angle error occurs because of the following two reasons: 1) the installation angle of the radar apparatus deviates due to an impact applied to the radar apparatus, and 2) a change in the antenna characteristics occurs due to aged deterioration of, for example, a radome or a bumper, or adhesion of, for example, mud to an antenna.

When an azimuth angle error occurs, it is difficult for the radar apparatus to detect an accurate azimuth angle of a target. When cruise control is performed on the basis of the azimuth angle detected in this manner, the safety is lost. To avoid such a situation, it is required to quickly detect the occurrence of an azimuth angle error and correct the azimuth angle error. For example, Japanese Patent No. 5551892 describes a technique for detecting and correcting an azimuth angle error.

The radar apparatus described in Japanese Patent No. 5551892 detects an azimuth angle error by using a guardrail extending in the traveling direction of the vehicle. More specifically, the radar apparatus detects reflection points on the guardrail while the vehicle is traveling on a straight road and detects the extending direction of the guardrail on the basis of the direction of the distribution of the reflection points. The extending direction of the guardrail along the straight road is the same as the traveling direction of the vehicle (a direction which corresponds to an azimuth angle of 0 degrees (hereinafter referred to as a "0-degree direction"). Therefore, the extending direction of the guardrail detected in the state in which the azimuth angle error does not occur is the same as the 0-degree direction. Thus, when the detected extending direction of the guardrail deviates from the 0-degree direction, the radar apparatus detects the deviation as an azimuth angle error and corrects the azimuth angle error.

US 2012/0194379 A1 relates to an electronic scan type radar device which uses a high resolution performance processing to estimate directions of arrival of radio waves, wherein powers of arrival waves received for targets are accurately calculated, that is, a vehicle-mounted radar device utilizing electronic scan which uses a predetermined angle estimation system to estimate directions of arrival of reflected waves, comprising finding mode vectors for angles calculated from the receive signals of the antennas, decomposing a vector of the receive signals into directions of the mode vectors, and defining the lengths of the decomposed vectors the receive powers of the reflected waves arriving from the targets.

US 5,977,906 A relates to a method and an apparatus for calibrating azimuth boresight in a radar system.

US 2013/0088382 A1 relates to calibration methods for phased array radar apparatus.

US 4,489,322 A relates to a radar calibration apparatus for the metric measurement of ground position by airborne photogrametry using real time high precision imagery, the transformation of those measurements from camera coordinates to antenna coordinates, the conversion of transformed coordinates to direction cosines of a measured ground position, comparison to radar derived direction, and the calculation and automatic correction of bias errors in direction of the radar measurement.

### SUMMARY

However, in the technique described in Japanese Patent No. 5551892, an azimuth angle error caused by a deviation of the axis is detected and is corrected. Accordingly, it is difficult to detect and correct an azimuth angle error caused by a change in the antenna characteristics.

The invention is defined by the subject-matter of the independent claims. Advantageous embodiments are covered by the dependent claims. One non-limiting and exemplary embodiment facilitates providing a radar apparatus capable of correcting an azimuth angle error caused by a change in antenna characteristics.

In one general aspect, the techniques disclosed here feature a radar apparatus mounted on a moving body including a signal transceiver that receives one or more radar signals reflected by one or more second reflection points of one or more targets located in a scan range with a plurality of antennas, detection circuitry that detects an azimuth angle of the one or more second reflection points of the one or more targets on the basis of a correspondence between a phase difference among the plurality of antennas and an azimuth angle and a phase difference observed in the scan range among the plurality of antennas, calculation circuitry that selects the one or more second reflection points located in a second range that differs from a first range including a central axis on which the phase difference among the antennas is zero and calculates a second azimuth angle error, and correction circuitry that corrects the correspondence.

According to an aspect of the present disclosure, the radar apparatus mounted on the moving body is capable of correcting an azimuth angle error caused by a change in the antenna characteristics.

It should be noted that general or specific exemplary embodiments may be implemented as a system, a method, an integrated circuit, a computer program, a storage medium, or any selective combination thereof.

Additional benefits and advantages of the disclosed exemplary embodiments will become apparent from the specification and drawings. The benefits and/or advantages may be individually obtained by the various exemplary embodiments and features of the specification and drawings, which need not all be provided in order to obtain one or more of such benefits and/or advantages.

### BRIEF DESCRIPTION OF THE DRAWINGS

Fig. 1 is a plan view illustrating a situation in which a vehicle having an existing radar apparatus mounted thereon travels on a straight road;
Fig. 2 is a graph illustrating an example of the result of detection of a target when an axis deviation occurs in an existing radar apparatus;
Fig. 3 is a graph illustrating an example of the result of detection of a target when a change in the antenna characteristics occurs in the existing radar apparatus;
Fig. 4 is a block diagram illustrating an example of the configuration of a radar apparatus according to a first exemplary embodiment of the present disclosure;
Fig. 5 is a flowchart illustrating an example of the operation performed by the radar apparatus according to the first exemplary embodiment of the present disclosure;
Fig. 6 is a plan view illustrating a situation in which a vehicle having a radar apparatus mounted thereon travels on a straight road, according to the first exemplary embodiment of the present disclosure;
Fig. 7 is a graph illustrating table update process 1;
Fig. 8 is a graph illustrating table update process 2;
Fig. 9 is a plan view illustrating a situation in which the vehicle having the radar apparatus mounted thereon enters a right hand corner of the road, according to the first exemplary embodiment of the present disclosure;
Fig. 10 is a plan view illustrating a situation in which the vehicle having the radar apparatus mounted thereon enters a right hand corner of the road, according to the first exemplary embodiment of the present disclosure;
Fig. 11 is a plan view illustrating a situation in which the vehicle having the radar apparatus mounted thereon enters a left hand corner of the road, according to the first exemplary embodiment of the present disclosure;
Fig. 12 is a plan view illustrating a situation in which the vehicle having the radar apparatus mounted thereon enters a left hand corner of the road, according to the first exemplary embodiment of the present disclosure;
Fig. 13 is a block diagram illustrating an example of the configuration of a radar apparatus according to a second exemplary embodiment of the present disclosure; and
Fig. 14 is a flowchart illustrating an example of the operation performed by the radar apparatus according to the second exemplary embodiment of the present disclosure;

### DETAILED DESCRIPTION

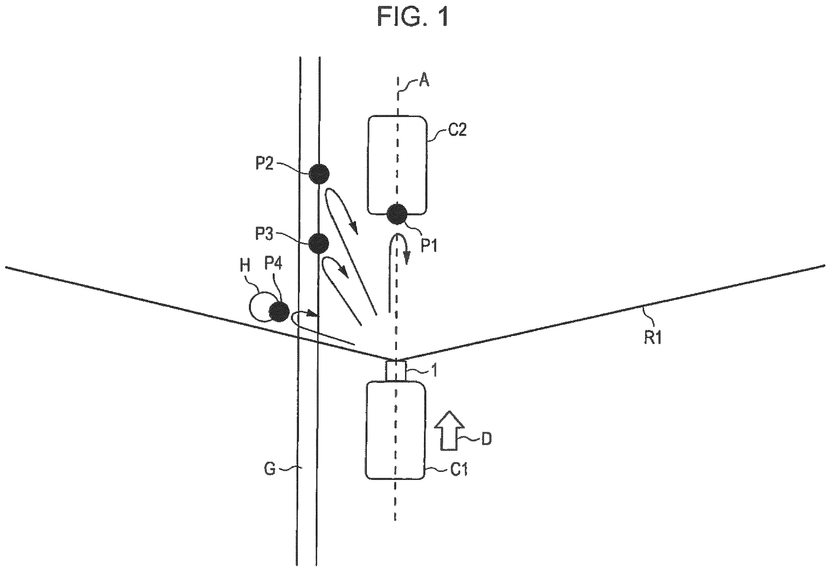

The technique described in Japanese Patent No. 5551892 (hereinafter referred to as the "existing technique") is described below with reference to Figs. 1 to 3.

Fig. 1 is a plan view illustrating a situation in which a vehicle C1 and a vehicle C2 travel on a straight road in a traveling direction D. The vehicle C1 has a radar apparatus 1 mounted on the front section of the body thereof. The radar apparatus 1 is a radar apparatus described in Japanese Patent No. 5551892. The vehicle C2 is a preceding vehicle traveling in front of the vehicle C1. On a side of the vehicles C1 and C2, there is a guardrail G along a straight road. In addition, a pedestrian H is present in the vicinity of the guardrail G.

In Fig. 1, the radar scan range R1 is a range in which the radar apparatus 1 can scan by using the radar signal. It is assumed that the central axis A of the radar scan range R1 coincides with the traveling direction D. In addition, the direction of the central axis A is the same as a direction at an azimuth angle = 0 degrees.

In Fig. 1, the radar apparatus 1 transmits a radar signal to the radar scan range R1 and receives the radar signal reflected by each of reflection point P1 of the vehicle C2, reflection points P2 and P3 of the guardrail G, and a reflection point P4 of a pedestrian H.

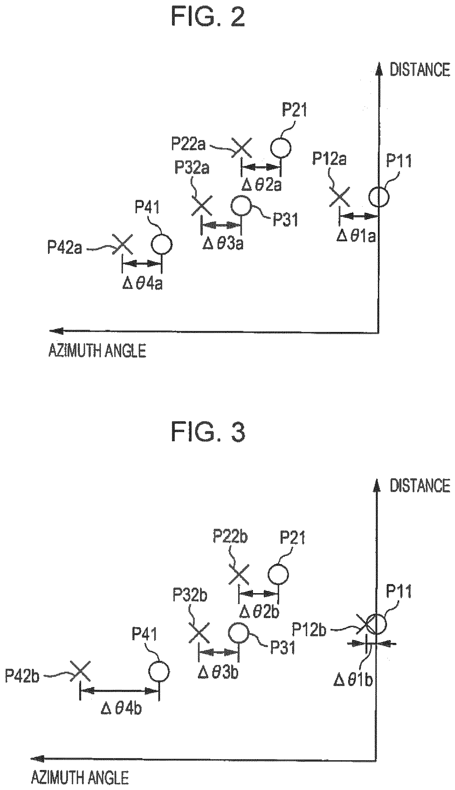

Fig. 2 illustrates an example of the result of detection of a target when the axis deviation occurs in the radar apparatus 1. More specifically, Fig. 2 is a graph with the ordinate that represents the distance between the vehicle C1 and each of the reflection points and the abscissa that represents the azimuth angle of each of the reflection points.

In Fig. 2, the true values representing the positions of the reflection points P1, P2, P3, and P4 illustrated in Fig. 1 are plotted as P11, P21, P31, and P41, respectively. In addition, the detected values representing the positions of the reflection points P1, P2, P3, and P4 detected by the radar apparatus 1 in which the axis deviation occurs are plotted as P12a, P22a, P32a, and P42a, respectively. Each of Δθ1a, Δθ2a, Δθ3a, and Δθ4a represents the difference between the true value and the detected value, that is, the azimuth angle error.

The azimuth angle errors caused by the axis deviation are the same as the angle of the axis deviation for all directions of the radar scan range R1. That is, let Δθ0 be the angle of the axis deviation. Then, the relationship of Δθ1a = Δθ2a = Δθ3a = Δθ4a = Δθ0 holds.

In the existing technique, the extending direction of the guardrail G is detected on the basis of the reflection points P2 and P3 of the guardrail G, and Δθ0 is obtained from the difference between the extending direction and the traveling direction D. By subtracting Δθ0 from each of the detected values P12a, P22a, P32a, and P42a, each of the azimuth angle errors Δθ1a, Δθ2a, Δθ3a, and Δθ4a is corrected to 0.

Note that according to the existing technique, the azimuth angle of a target is detected on the basis of the phase differences among a plurality of antennas in an antenna array (hereinafter simply referred to as "phase differences"). In addition, in the existing technique, the direction of the central axis A of the radar scan range R1 is defined as the direction of the azimuth angle of 0 degrees. For example, in terms of the reflection point P1 on the central axis A, since the distance between the reflection point P1 and each of the antennas is the same, the phase difference becomes zero even when a change in the antenna characteristics occurs. Therefore, the influence on estimation of the direction of arrival of the radar signal is small and, thus, an azimuth angle error is less likely to occur.

In contrast, in terms of, for example, the reflection points P2 to P4 which are not on the central axis A, the phase difference becomes large. Accordingly, the amount of change in the phase difference increases when the antenna characteristics change, and an azimuth angle error easily occurs.

Fig. 3 illustrates an example of a result of detection of a target when a change in the antenna characteristics occurs in the radar apparatus 1. In the graph of Fig. 3, the ordinate represents the distance between the vehicle C1 and each of the reflection points, and the abscissa represents the azimuth angle of each of the reflection points.

In Fig. 3, the true values representing the positions of the reflection points P1, P2, P3, and P4 illustrated in Fig. 1 are plotted as P11, P21, P31, and P41, respectively. In addition, the values indicating the positions of P1, P2, P3, and P4 detected by the radar apparatus 1 in which a change in antenna characteristics occurs are plotted as P12b, P22b, P32b, and P42b, respectively. Each of Δθ1b, Δθ2b, Δθ3b, and Δθ4b represents the difference between the true value and the detected value, namely, the azimuth angle error.

The azimuth angle error caused by the change in the antenna characteristics is less likely to occur in the direction of the central axis of the antenna (for example, the central axis A of the radar scan range R1 illustrated in Fig. 1). The azimuth angle error increases with increasing azimuth angle with respect to the central axis of the antenna. For example, it is considered that the azimuth angle errors are the same since the azimuth angles of the reflection points P2 and P3 of the guardrail G are close to one another. Accordingly, the following expression is obtained among the azimuth angle errors: Δθ4b > Δθ2b ≈ Δθ3b > Δθ1b = 0. That is, azimuth angle errors of different magnitudes occur for each of the azimuth angles.

Therefore, when as in the existing technique, correction is performed by using the azimuth angle errors obtained from the detection results of the reflection points P2 and P3 of the guardrail G, the azimuth angle errors for the reflection points P2 and P3 can be reduced to zero. However, for the reflection point P4, the azimuth angle error cannot be completely corrected, and a residual error occurs. For the reflection point P1, although the azimuth angle error is originally sufficiently small, the error increases. As described above, according to the existing technique, it is difficult to correct such unequal azimuth angle errors caused by a change in antenna characteristics.

To expand the applications of the radar apparatus (e.g., to detect a pedestrian located at an intersection), radar apparatuses having a wider detection range are required. Therefore, it is desired to correct unequal azimuth angle errors.

The radar apparatus according to the present disclosure allows such unequal azimuth angle errors caused by a change in antenna characteristics to be corrected.

Exemplary embodiments of the present disclosure are described below with reference to the accompanying drawings.

### First Exemplary Embodiment

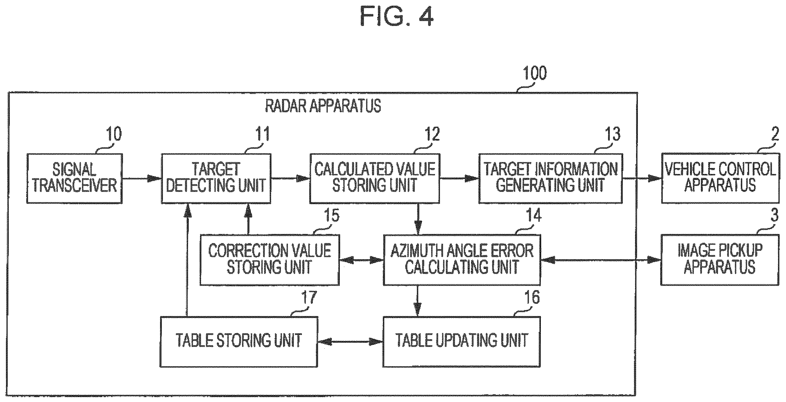

The configuration of a radar apparatus 100 according to the present exemplary embodiment is described with reference to Fig. 4. Fig. 4 is a block diagram illustrating an example of the configuration of the radar apparatus 100.

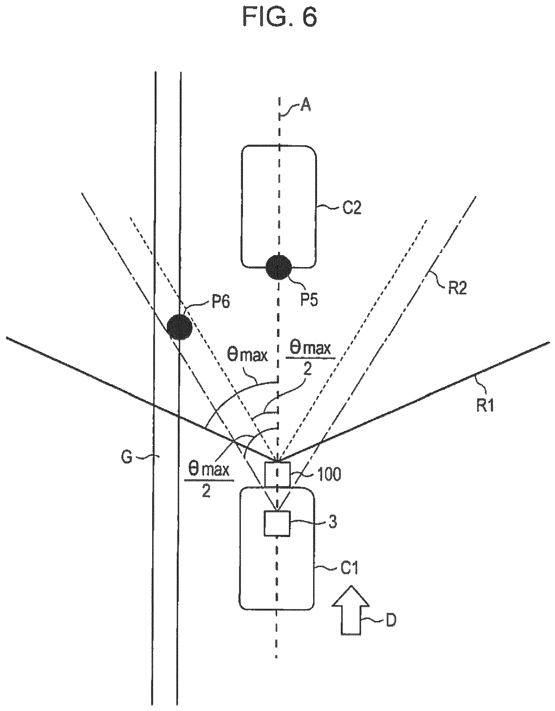

According to the present exemplary embodiment, the radar apparatus 100 is mounted on a vehicle. However, the present disclosure is not limited to vehicle having the radar apparatus 100 mounted thereon. The radar apparatus 100 may be mounted on another type of moving body (for example, a motorcycle or a bicycle). Like the radar apparatus 1 illustrated in Fig. 1, the radar apparatus 100 is mounted on the front of the vehicle (refer to Fig. 6). Note that the installation position of the radar apparatus 100 is not limited to the front of the vehicle but may be, for example, the front side, the rear side, or the back of the vehicle.

The radar apparatus 100 includes a signal transceiver 10, a target detecting unit 11 (an example of a detector), a calculated value storing unit 12, a target information generating unit 13, an azimuth angle error calculating unit 14 (an example of a calculator), a correction value storing unit 15, a table updating unit 16 (an example of a corrector), and a table storing unit 17.

The signal transceiver 10 includes an antenna array (not illustrated) including a plurality of antennas. The signal transceiver 10 transmits a radar signal from each of the antennas. The range into which the radar signal is transmitted is, for example, the radar scan range R1 illustrated in Fig. 1, which is located in front of the vehicle (refer to Fig. 6). In addition, as in Fig. 1, the direction of the central axis A of the radar scan range R1 is the same as the traveling direction D of the vehicle (refer to Fig. 6).

Furthermore, the signal transceiver 10 receives a radar signal reflected by a reflection point of one or more targets located in the radar scan range R1 (the radar signal is also referred to as a "reflected signal"). Examples of the one or more targets include a vehicle in front, an oncoming vehicle, a pedestrian, and a roadside fixed object, such as a guardrail, a wall, or a curb.

The target detecting unit 11 calculates the distance, the azimuth angle, and the relative speed of each of the targets based on the radar signal received by the signal transceiver 10. As used herein, the term "distance" refers to, for example, the distance between a reflection point of the target and the radar apparatus 100. In addition, the term "azimuth angle" refers to an angle indicating the direction in which the reflection point of the target is located when an azimuth angle indicating the direction of the central axis A is defined as 0 degrees.

To calculate the azimuth angle, the target detecting unit 11 refers to, for example, a table stored in the table storing unit 17. The table contains a correspondence between a phase difference and an azimuth angle. By using the table, the target detecting unit 11 identifies the azimuth angle corresponding to the observed phase difference. In this manner, the azimuth angle is calculated (or detected). As used herein, the term "observed phase distance" refers to, for example, the phase difference determined on the basis of the radar signal received by the signal transceiver 10.

Thereafter, the target detecting unit 11 stores the calculated values of the distance, the azimuth angle, and the relative speed in the calculated value storing unit 12.

Note that at this time, the target detecting unit 11 adds a correction value read out of the correction value storing unit 15 to the calculated azimuth angle value. Thereafter, the target detecting unit 11 stores the azimuth angle value in the calculated value storing unit 12. The correction value storing unit 15 stores a value of 0 as the initial value of the correction value. Thereafter, when the azimuth angle error is corrected, the calculated correction value is stored.

The target information generating unit 13 reads the values of the distance, the azimuth angle, and the relative speed in the calculated value storing unit 12 and generates target information indicating the readout values. Thereafter, the target information generating unit 13 outputs the target information to a vehicle control apparatus 2. The vehicle control apparatus 2 performs various kinds of control (e.g., control to cause the vehicle to follow a vehicle in front and control to avoid collision with another vehicle, a pedestrian, or an obstacle on the road surface) on the basis of the target information input from the target information generating unit 13.

While the present exemplary embodiment has been described with reference to the target information output to the vehicle control apparatus 2 as an example, the destination of the target information is not limited to the vehicle control apparatus 2. For example, the target information may be output to another apparatus (e.g., a display apparatus).

The azimuth angle error calculating unit 14 calculates the difference between the azimuth angle value read out of the calculated value storing unit 12 and the true value of the azimuth angle input from the image pickup apparatus 3. The calculated difference is the azimuth angle error.

The table updating unit 16 updates the table stored in the table storing unit 17 on the basis of the azimuth angle error calculated by the azimuth angle error calculating unit 14. A particular example of this updating process is described below.

The image pickup apparatus 3 captures an image of the area in the vicinity of the vehicle (the area in a predetermined direction from the vehicle). An example of the image pickup apparatus 3 is a monocular camera or a stereo camera. The image pickup apparatus 3 captures the image of at least one target located in a predetermined imaging range R2 (refer to Fig. 6) and extracts the true value of the azimuth angle of the target. An existing technique can be used for the extraction process and, thus, a detailed description of the technique is not given here. As described above, the true value of the extracted azimuth angle is output to the azimuth angle error calculating unit 14 of the radar apparatus 100. Note that the image pickup apparatus 3 has a function of correcting an error in the result of detection by imaging, and the true value of the azimuth angle of the target obtained by the image pickup apparatus 3 is a value within an allowable range that can be used by the radar apparatus.

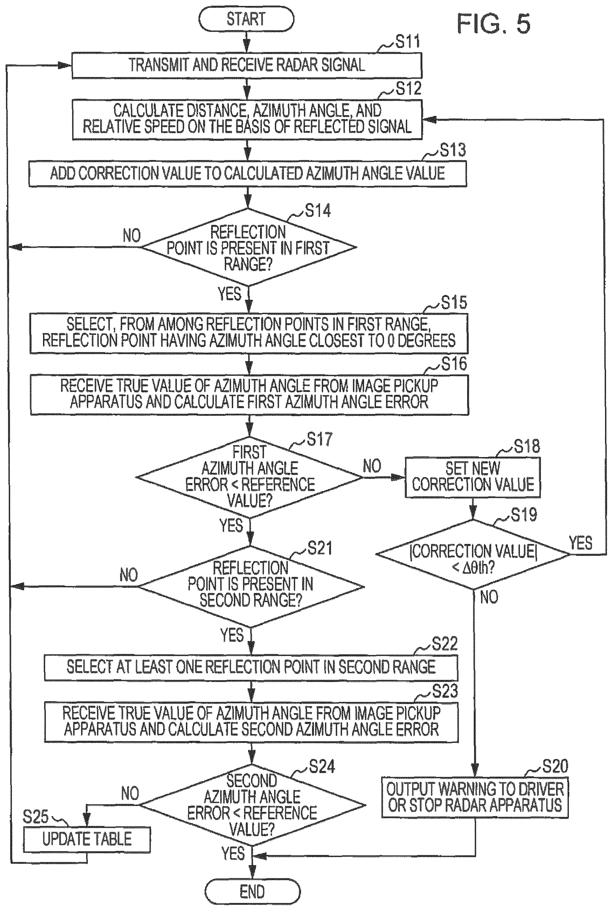

The configuration of the radar apparatus 100 has been described above. Note that the operations performed by each of the units of the radar apparatus 100 is an example, and other operations are described below with reference to the flowchart illustrated in Fig. 5.

An example of the operation performed by the radar apparatus 100 is described below with reference to Figs. 5 and 6. Fig. 5 is a flowchart illustrating an example of the operation performed by the radar apparatus 100. Like Fig. 1, Fig. 6 is a plan view illustrating the vehicles C1 and C2 travelling along a straight road in the traveling direction D.

In Fig. 6, the vehicle C1 has the radar apparatus 100 and the image pickup apparatus 3 mounted thereon, and the vehicle C2 is travelling in front of the vehicle C1.

In addition, in Fig. 6, the radar apparatus 100 and the image pickup apparatus 3 are oriented in the traveling direction D of the vehicle C1, and the central axis A of the radar scan range R1 extends in the traveling direction D of the vehicle. The central axis of the imaging range R2 is the same as the central axis A of the radar scan range R1. Here, the direction of the central axis A is a direction defined by an azimuth angle of 0 degrees. Furthermore, the values of the distance and the azimuth angle of the target obtained by the radar apparatus 100 and the image pickup apparatus 3 are plotted on the coordinate axes having the same origin (for example, the middle of the front end of the vehicle C1). Note that the imaging range R2 does not necessarily need to be the same as the radar scan range R1. It may be required that the imaging range R2 includes an area corresponding to an angle (θmax/2) that is half the maximum detection azimuth angle (Qmax in Fig. 6) of the radar scan range R1.

The description below is given with reference to an example in which the azimuth angle error is detected and corrected in the left half of the radar scan range R1 which is divided by the central axis A. Note that according to the present exemplary embodiment, the same applies to the right half.

In Fig. 5, the signal transceiver 10 transmits and receives a radar signal first (step S11). For example, the signal transceiver 10 transmits the radar signal to the radar scan range R1 and receives the reflected signal coming from a reflection point of the target located in the radar scan range R1.

Subsequently, the target detecting unit 11 calculates the distance, the azimuth angle, and the relative speed for each of the reflection points on the basis of the reflected signal received in step S11 (step S12).

Subsequently, the target detecting unit 11 reads the correction value in the correction value storing unit 15 and adds the correction value to the azimuth angle value calculated in step S12 (step S13). Thereafter, the target detecting unit 11 stores, in the calculated value storing unit 12, the values of the distance, the azimuth angle, and the relative speed (hereinafter referred to as "calculated values") for each of the reflection points. That is, the calculated value storing unit 12 stores the calculated values of the distance and the relative speed which are calculated in step S12 and the calculated value of the azimuth angle which is obtained by adding the correction value to the azimuth angle value in step S13. Note that when the correction value is the initial value (zero), the calculated value of the azimuth angle stored in the calculated value storing unit 12 is the value calculated in step S12.

Subsequently, the azimuth angle error calculating unit 14 reads each of the calculated values for each of the reflection points in the calculated value storing unit 12. Thereafter, the azimuth angle error calculating unit 14 determines whether a reflection point is present in a first range on the basis of the read calculated value of the azimuth angle (step S14). For example, the first range is a range of -Δθth degrees or greater and 0 degrees or less. Δθth is an allowance angle when the axis deviation occurs (hereinafter referred to as an "axis deviation allowance angle"). Δθth is set to an appropriate value.

For example, when at least one readout calculated value of an azimuth angle is within the first range, the azimuth angle error calculating unit 14 determines that a reflection point is present.

when, in step S14, it is determined that no reflection point is in the first range (NO in step S14), the processing returns to step S11.

However, when, in step S14, it is determined that a reflection point is present in the first range (YES in step S14), the azimuth angle error calculating unit 14 selects, from among the reflection points in the first range, the reflection point having an azimuth angle that is the closest to 0 degrees (i.e., the central axis A) (step S15). In the example illustrated in Fig. 6, the reflection point P5 of the vehicle C2 is selected. Hereinafter, the calculated value of the azimuth angle of the reflection point P5 is referred to as "θ52".

Thereafter, the azimuth angle error calculating unit 14 outputs the calculated value of the reflection point selected in step S15 to the image pickup apparatus 3. The image pickup apparatus 3 extracts the azimuth angle of the reflection point of the target corresponding to the calculated value input from the azimuth angle error calculating unit 14 and outputs the extracted azimuth angle to the azimuth angle error calculating unit 14 as the true value of the azimuth angle. In the example illustrated Fig. 6, since the reflection point P5 is present in the vicinity of the azimuth angle of 0 degrees and has a constant speed, it is presumed that the reflection point P5 is a reflection point of the vehicle C2. Thus, the image pickup apparatus 3 outputs, to the azimuth angle error calculating unit 14, the true value of the azimuth angle of the reflection point P5. Hereinafter, the true value of the azimuth angle of the reflection point P5 is referred to as "θ51".

Subsequently, the azimuth angle error calculating unit 14 receives the true value of the azimuth angle from the image pickup apparatus 3 and calculates a first azimuth angle error on the basis of the true value and the calculated value (step S16). For example, the azimuth angle error calculating unit 14 calculates the difference between the calculated value θ52 read from the calculated value storing unit 12 and the true value θ51 input from the image pickup apparatus 3. The calculated difference is the azimuth angle error Δθ5 of the reflection point P5 (an example of the first azimuth angle error).

Subsequently, the azimuth angle error calculating unit 14 determines whether the first azimuth angle error calculated in step S16 is less than a predetermined reference value (step S17).

As a result of the determination made in step S17, when the first azimuth angle error is less than the reference value (YES in step S17), the azimuth angle error calculating unit 14 determines that an axial deviation does not occur in the radar apparatus 100, and the processing proceeds to the detection process of the azimuth angle error caused by a change in the antenna characteristics. In this case, the processing proceeds to step S21. Step S21 and the subsequent steps are described below.

However, as a result of the determination made in step S17, when the first azimuth angle error is not less than the reference value, that is, when the first azimuth angle error is greater than or equal to the reference value (NO in step S17), the azimuth angle error calculating unit 14 determines that an axial deviation occurs in the radar apparatus 100. In this case, the processing proceeds to step S18.

The azimuth angle error calculating unit 14 sets a new correction value (step S18). More specifically, the azimuth angle error calculating unit 14 reads the current correction value from the correction value storing unit 15 and sets, as a new correction value, a value obtained by subtracting the first azimuth angle error from the current correction value.

Subsequently, the azimuth angle error calculating unit 14 determines whether the absolute value of the new correction value set in step S18 is less than the axis deviation allowance angle Δθth (step S19).

When, as a result of the determination made in step S19, the absolute value of the new correction value is less than the axis deviation allowance angle Δθth (YES in step S19), the processing returns to step S12.

However, when, as a result of the determination made in step S19, the absolute value of the new correction value is not less than the axis deviation allowance angle Δθth, that is, when the absolute value of the new correction value is greater than or equal to the axis deviation allowance angle Δθth (NO in step S19), the azimuth angle error calculating unit 14 determines that the radar apparatus 100 cannot detect the target normally. The azimuth angle error calculating unit 14 outputs, for example, a warning to the driver of the vehicle (an example of an occupant) or a signal for stopping the operation performed by the radar apparatus 100 (for example, scanning using a radar signal) (step S20). To send the warning to the driver, the azimuth angle error calculating unit 14, for example, outputs a signal for displaying a predetermined warning message to a display apparatus (not illustrated). To stop the operation performed by the radar apparatus 100, the azimuth angle error calculating unit 14, for example, outputs a signal instructing the signal transceiver 10 to stop the scanning using the radar signal.

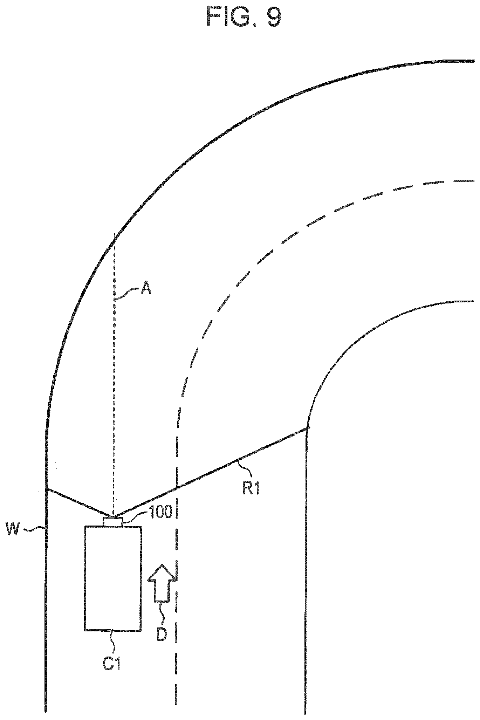

When the first azimuth angle error is less than the reference value (YES in step S17), the azimuth angle error calculating unit 14 determines whether a reflection point is present in a second range on the basis of the calculated value of the azimuth angle among the calculated values of each of the reflection points read from the calculated value storing unit 12 (step S21). The second range is, for example, a range of -θmax/2 degrees or less. Note that θmax is the largest detected azimuth angle for the radar scan range R1 and is appropriately set. Also, note that the second range may include part or the entirety of the first range (for example, in the case illustrated in Figs. 9 to 12 described below).

For example, when at least one of the readout calculated values of the azimuth angles falls within the second range, the azimuth angle error calculating unit 14 determines that a reflection point is present.

When, as a result of the determination made in step S21, no reflection point is present in the second range (NO in step S21), the processing returns to step S11.

However, when, as a result of the determination made in step S21, a reflection point is present in the second range (YES in step S21), the azimuth angle error calculating unit 14 selects at least one reflection point in the second range (step S22). Note that when, as illustrated in Fig. 6, the imaging range R2 is narrower than the radar scan range R1, a point within the imaging range R2 is selected. In the example illustrated in Fig. 6, the reflection point P6 in the guardrail G is selected. Hereinafter, the calculated value of the azimuth angle of the reflection point P6 is referred to as "θ62".

Thereafter, the azimuth angle error calculating unit 14 outputs the calculated value of the reflection point selected in step S22 to the image pickup apparatus 3. The image pickup apparatus 3 extracts the azimuth angle of the reflection point of the target corresponding to the calculated value input from the azimuth angle error calculating unit 14 and outputs the extracted azimuth angle to the azimuth angle error calculating unit 14 as the true value of the azimuth angle. For example, as illustrated in Fig. 6, when the target is a guardrail G in which reflection points are continuously present, the image pickup apparatus 3 identifies the reflection point having a distance from the vehicle C1 equal to the calculated value input from the azimuth angle error calculating unit 14 and extracts, as a true value, the azimuth angle of the identified reflection point. This is because the distance of the reflection point calculated by the radar apparatus 100 is taken to be the same as the true value, since the accuracy of the distance is maintained even in a situation where the axis deviation occurs or the antenna characteristics change. In the case illustrated in Fig. 6, the image pickup apparatus 3 outputs the true value of the azimuth angle of the reflection point P6 to the azimuth angle error calculating unit 14. Hereinafter, the true value of the azimuth angle of the reflection point P6 is referred to as "θ61".

Subsequently, the azimuth angle error calculating unit 14 receives the true value of the azimuth angle from the image pickup apparatus 3 and calculates a second azimuth angle error on the basis of the true value and the calculated value (step S23). For example, the azimuth angle error calculating unit 14 calculates a difference between the calculated value θ62 read from the calculated value storing unit 12 and the true value θ61 input from the image pickup apparatus 3. The calculated difference is an azimuth angle error Δθ6 of the reflection point P6 (an example of the second azimuth angle error).

Subsequently, the azimuth angle error calculating unit 14 determines whether the calculated second azimuth angle error is less than a predetermined reference value (step S24). The reference value here may be a value that differs from the reference value used in step S17.

When, as a result of the determination made in step S24, the second azimuth angle error is less than the reference value (YES in step S24), the azimuth angle error calculating unit 14 determines that no change in the antenna characteristics has occurred in the radar apparatus 100. In such a case, the series of processes ends.

However, when, as a result of the determination in step S24, the second azimuth angle error is not less than the reference value, that is, when the second azimuth angle error is greater than or equal to the reference value (NO in step S24), the azimuth angle error calculating unit 14 determines that a change in the antenna characteristics occurs in the radar apparatus 100 and outputs the second azimuth angle error calculated in step S23 to the table updating unit 16.

Subsequently, the table updating unit 16 updates the table stored in the table storing unit 17 on the basis of the second azimuth angle error (step S25). After the process of step S25 is completed, the processing returns to step S11. Note that a particular example of the table update process in step S25 is described below.

The example of the operation performed by the radar apparatus 100 has been described above.

While the above description has been given with reference to the detection and correction of the azimuth angle error in the left half region of the radar scan range R1 with respect to the central axis A as an example, the detection and correction is not limited thereto. For example, the azimuth angle error may be corrected for the right half region of the radar scan range R1 with respect to the central axis A by the same procedure as described above. In such a case, the first range is a range of 0 degrees or more and +Δθth degrees or less, and the second range is a range of θmax/2 degrees or more.

Alternatively, the correction result in the left half region may be symmetrically applied to the correction in the right half region. In such a case, since the amount of change in the antenna characteristics in the left half region may differ from that in the right half region, the correction result in the right half region is determined to take the difference into account.

Still alternatively, the azimuth angle error may be corrected in the left and right regions at the same time. In such a case, reflection points that can be simultaneously used for correction in the left and right regions are selected.

A particular example of the table update process in step S25 is described below. According to the present exemplary embodiment, table update process 1 or table update process 2 can be employed.

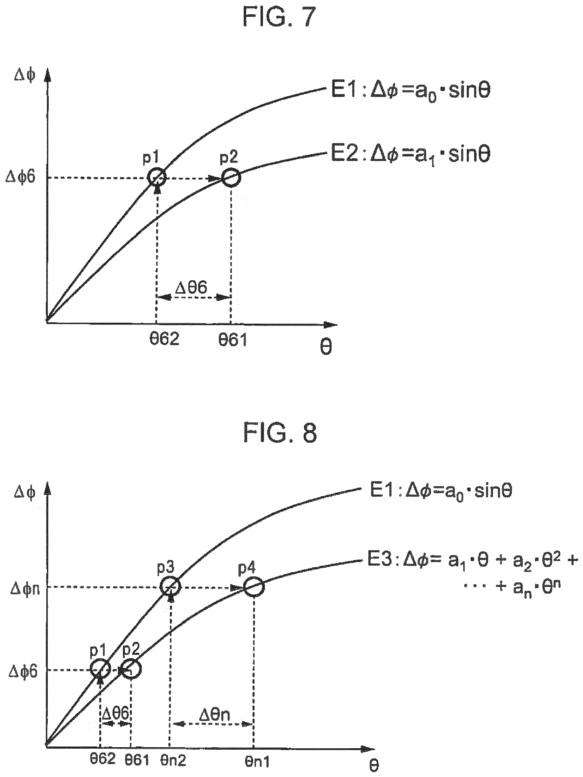

Table update process 1 is described first with reference to Fig. 7. Fig. 7 is a graph illustrating table update process 1. In Fig. 7, the ordinate represents the phase difference, and the abscissa represents the azimuth angle. In this example, description is given with reference to the reflection point P6 illustrated in Fig. 6, and the observed phase difference is Δφ6.

In Fig. 7, Expression E1 is a predetermined theoretical expression representing the correspondence between the phase difference and the azimuth angle in the table. In this case, the table updating unit 16 calculates p2 (θ61, Δφ6) by translating p1 (θ62, Δφ6) in Expression E1 by using the azimuth angle error Δθ6 first.

Subsequently, the table updating unit 16 performs curve fitting with respect to p2 in accordance with Expression E2 and calculates a₁ in Expression E2.

Thereafter, the table updating unit 16 creates a table indicating the correspondence relationship between the phase difference and the azimuth angle on the basis of Expression E2 and stores the created table in the table storing unit 17. Thereafter, the target detecting unit 11 calculates the azimuth angle on the basis of the created table.

While the above description has been given with reference to creation of a new table based on Expression E2 as an example, the target detecting unit 11 may calculate the azimuth angle on the basis of Expression E2.

As described above, table update process 1 is performed.

In table update process 1, a single reflection point located in the second range is used. In contrast, in table update process 2, a plurality of reflection points located in the second range are used. In the case of using a plurality of reflection points, the phase difference observed for each of the reflection points and the azimuth angle errors calculated for each of the reflection points are used.

Table update process 2 is described below with reference to Fig. 8. Fig. 8 is a graph illustrating table update process 2. In Fig. 8, the ordinate represents the phase difference, and the abscissa represents the azimuth angle. In this example, n reflection points (n ≥ 2) including the reflection point P6 illustrated in Fig. 6 are used, and the observed phase differences are Δφ1, Δφ2, ..., Δφ6, ..., and Δφn. In addition, the predetermined theoretical expression is Expression E1.

In this case, the table updating unit 16 calculates p2 (θ61, Δφ6) by translating p1 (θ62, Δφ6) in Expression E1 by the azimuth angle error Δθ6 first. In addition, the table updating unit 16 calculates p4 (θn1, Δφn) by translating p3 (θn2, Δφn) in Expression E1 by the azimuth angle error Δθn. Note that the same processing is performed on each of the other reflection points.

Subsequently, the table updating unit 16 performs curve fitting on the azimuth angles and the phase differences obtained as a result of the calculation in accordance with Expression E3 to calculate a₁ to aₙ in Expression E3. Thereafter, the table updating unit 16 creates a table indicating the correspondence between the phase difference and the azimuth angle on the basis of Expression E3. The table updating unit 16 stores the newly created table in the table storing unit 17. Thereafter, the target detecting unit 11 calculates the azimuth angle on the basis of the created table.

While the above description has been given with reference to creation of a new table based on Expression E3 as an example, the present disclosure is not limited to this example. The new table may not be created based on Expression E3.ln such a case, the target detecting unit 11 calculates the azimuth angle on the basis of Expression E3 without using a table.

As described above, table update process 2 is performed.

Note that when, in table update process 2, the n reflection points are uniformly distributed in the radar scan range R1, the correction accuracy of the azimuth angle error can be increased more. Accordingly, in the case where a plurality of reflection points are uniformly distributed in the radar scan range R1 due to the situation of the road on which the vehicle travels, a detection and correction process of the azimuth angle error may be performed. In this manner, the detection accuracy of the radar apparatus 100 can be kept higher. A particular example of such a case is described below.

The azimuth angle error calculating unit 14 determines whether one or more reflectors (one or more targets) that are continuously present on the roadside during traveling. An example of one or more reflectors is one or more targets, such as a wall or a guardrail installed on an express way or a tunnel. For example, when a reflector is included in the roadside image captured by the image pickup apparatus 3, the azimuth angle error calculating unit 14 determines that one or more reflectors that are continuously present are found. Alternatively, for example, when the azimuth angle error calculating unit 14 detects that the vehicle is traveling on an express way or a tunnel on the basis of the map information and the current position of the vehicle, the azimuth angle error calculating unit 14 may determine that one or more reflectors that are continuously present are found on the roadside.

Subsequently, when the azimuth angle error calculating unit 14 determines that one or more reflectors that are continuously present are found on the roadside during traveling, the azimuth angle error calculating unit 14 determines whether the azimuth angle error can be corrected on the basis of the positional relationship between the shape of the road and the radar scan range R1.

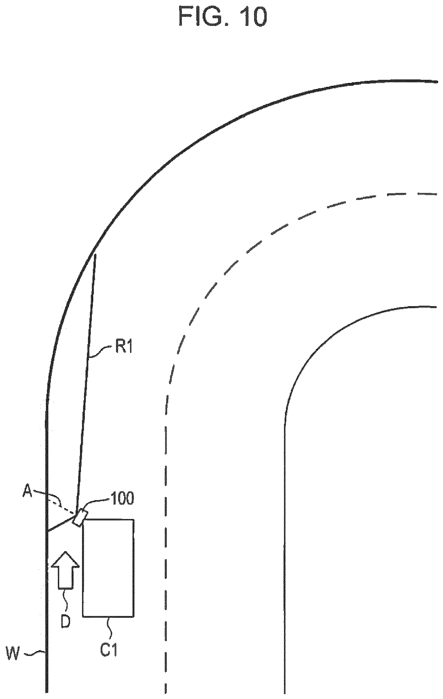

Fig. 9 is a plan view illustrating a situation in which the vehicle C1 having the radar apparatus 100 mounted at the front center thereof enters a right hand corner of the road. As illustrated in Fig. 9, a wall W serving as at least one reflector is continuously present in a range on the left side of the central axis A in the radar scan range R1. In addition, no reflector is present in the range on the right side of the central axis A in the radar scan range R1. In such a case, the azimuth angle error calculating unit 14 determines that the wall W is continuously present on the roadside during traveling and determines that the azimuth angle error can be corrected in the range on the left side of the central axis A in the radar scan range R1. At this time, the azimuth angle error calculating unit 14 selects a plurality of reflection points in a range on the left side of the central axis A in the radar scan range R1 (an example of the second range). Thereafter, the azimuth angle error calculating unit 14 calculates a second azimuth angle error for each of the selected reflection points. Subsequently, the table is updated by the table updating unit 16 (the same applies to Figs. 10 to 12 described below).

Fig. 10 is a plan view illustrating a situation in which the vehicle C1 having the radar apparatus 100 mounted on the front left thereof enters a right hand corner of the road. As illustrated in Fig. 10, a wall W serving as at least one reflector is continuously present over the entire radar scan range R1. In such a case, the azimuth angle error calculating unit 14 determines that the wall W is continuously present on the roadside during traveling and determines that the azimuth angle error can be corrected over the entire range of the radar scan range R1. In this case, the azimuth angle error calculating unit 14 selects a plurality of reflection points from the entire range of the radar scan range R1 (an example of the second range). Thereafter, the azimuth angle error calculating unit 14 calculates the second azimuth angle error for each of the selected reflection points.

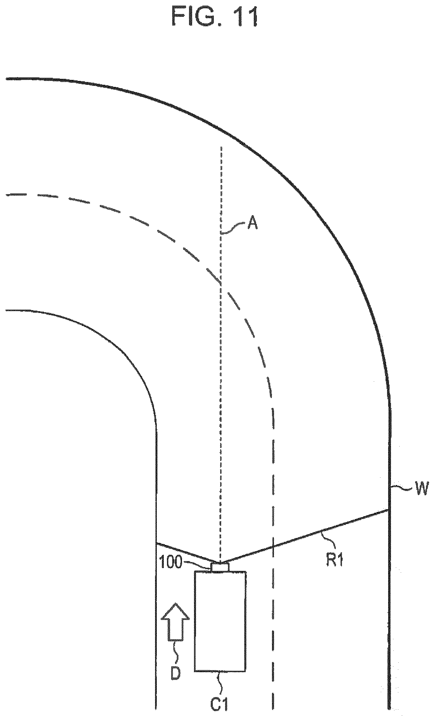

Fig. 11 is a plan view illustrating a situation in which the vehicle C1 having the radar apparatus 100 mounted at the front center thereof enters a left hand corner of the road. As illustrated in Fig. 11, a wall W serving as at least one reflector is continuously present in a range on the right side of the central axis A in the radar scan range R1. In contrast, no reflector is present in the range on the left side of the central axis A in the radar scan range R1. In this case, the azimuth angle error calculating unit 14 determines that the wall W is continuously present on the roadside during traveling and determines that the azimuth angle error can be corrected in the range on the right side of the central axis A in the radar scan range R1. At this time, the azimuth angle error calculating unit 14 selects a plurality of reflection points in the range on the right side of the central axis A in the radar scan range R1 (an example of the second range) and calculates the second azimuth angle error for each of the selected reflection points.

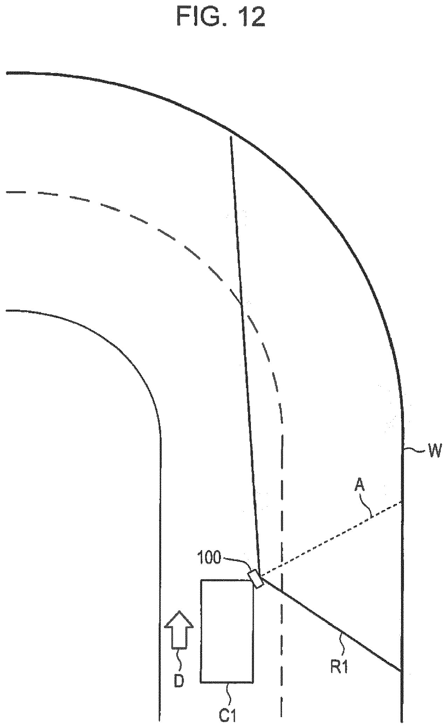

Fig. 12 is a plan view illustrating a situation in which the vehicle C1 having the radar apparatus 100 mounted on the front right thereof enters a left hand corner of the road. As illustrated in Fig. 12, a wall W serving as at least one reflector is continuously present across the entire range of the radar scan range R1. In such a case, the azimuth angle error calculating unit 14 determines that the wall W is continuously present on the roadside during traveling and determines that the azimuth angle error can be corrected over the entire range of the radar scan range R1. In this case, the azimuth angle error calculating unit 14 selects a plurality of reflection points in the entire range of the radar scan range R1 (an example of the second range) and calculates the second azimuth angle error for each of the selected reflection points.

While, in Figs. 9 to 12, description has been given with reference to the case where the radar apparatus 100 is mounted on the front center, front left, or front right of the vehicle body, the radar apparatus 100 may be mounted on a side or the rear of the vehicle body, or a side in the rear of the vehicle body. Even in such a case, when the road has such a shape that at least one reflector is continuously present within the radar scan range R1, the azimuth angle error can be correct in the same manner as described above.

In addition, the direction of the central axis A of the radar scan range R1 may be variable. For example, the radar apparatus 100 may change the direction of the central axis A in Fig. 9 to the direction of the central axis A in Fig. 10 and change it back to the original direction.

As described above, according to the radar apparatus of the present exemplary embodiment, the azimuth angle error caused by a change in antenna characteristics can be corrected. Furthermore, according to the radar apparatus of the present exemplary embodiment, it can be determined whether the azimuth angle error is caused by an axial deviation or a change in the antenna characteristics.

### Second Exemplary Embodiment

According to the first exemplary embodiment, when it is determined that the azimuth angle error caused by an axial deviation has occurred (NO in step S17), a process for correcting the azimuth angle error (e.g., step S18 in Fig. 5) is performed. In contrast, according to the present exemplary embodiment, when the first azimuth angle error is less than an axis deviation allowance angle, the processing proceeds to a step of detecting the azimuth angle error caused by a change in the antenna characteristics regardless of whether an axial deviation occurs.

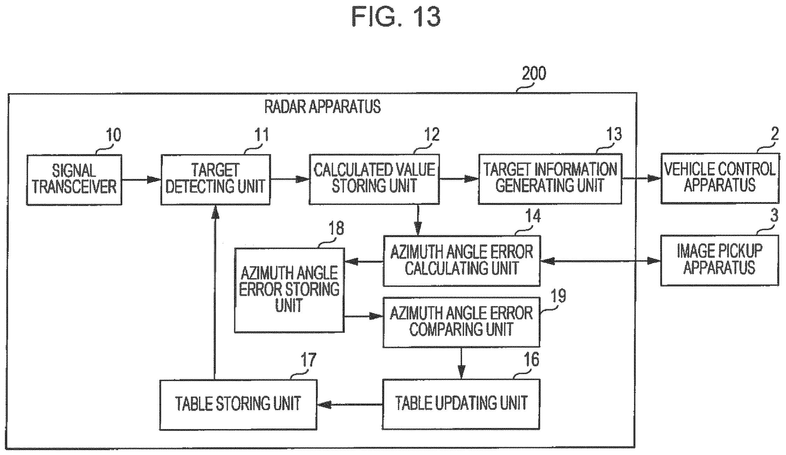

The configuration of a radar apparatus 200 according to the present exemplary embodiment is described below with reference to Fig. 13. Fig. 13 is a block diagram illustrating an example of the configuration of the radar apparatus 200. The same reference numerals are used in Fig. 13 to describe those constituent elements that are identical to the constituent elements of Fig. 4, and description of the constituent elements are not repeated.

Unlike the radar apparatus 100 illustrated in Fig. 4, the radar apparatus 200 illustrated in Fig. 13 includes an azimuth angle error storing unit 18 instead of the correction value storing unit 15. In addition, the radar apparatus 200 includes an azimuth angle error comparing unit 19.

The azimuth angle error storing unit 18 stores a first azimuth angle error calculated by the azimuth angle error calculating unit 14.

The azimuth angle error comparing unit 19 determines whether the absolute value of the difference between the second azimuth angle error and the first azimuth angle error is less than a predetermined reference value. When the absolute value is less than the reference value, the azimuth angle error comparing unit 19 determines that no change in the antenna characteristics has occurred in the radar apparatus 200. However, when the absolute value is not less than the reference value, the azimuth angle error comparing unit 19 determines that a change in the antenna characteristics has occurred in the radar apparatus 200 and, thus, outputs the second azimuth angle error to the table updating unit 16.

The radar apparatus 200 has the configuration described above.

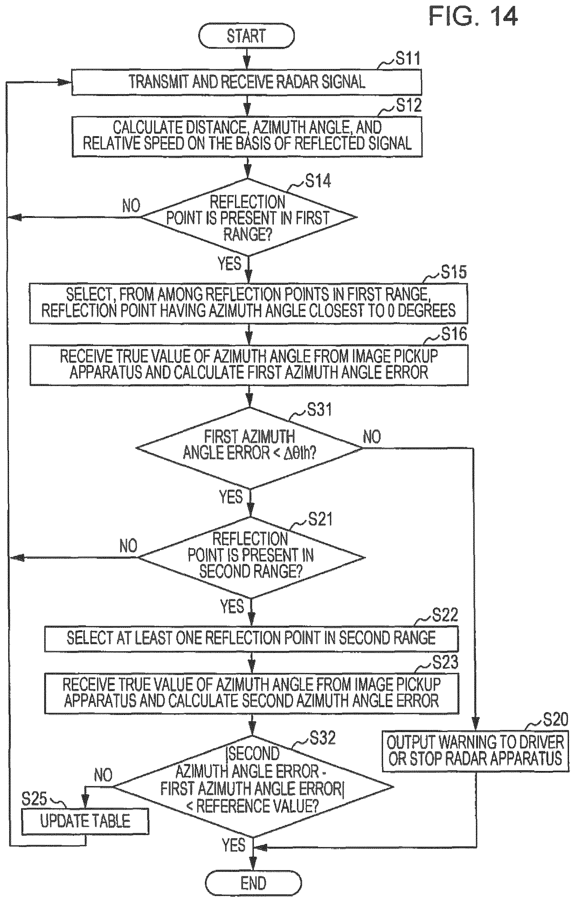

An example of the operation performed by the radar apparatus 200 is described with reference to Fig. 14. Fig. 14 is a flowchart illustrating an example of the operation performed by the radar apparatus 200. The same reference numerals are used in Fig. 14 to describe steps that are identical to steps of Fig. 5, and descriptions of the steps are not repeated.

In step S31, the azimuth angle error calculating unit 14 determines whether the first azimuth angle error calculated in step S16 is less than a predetermined axis deviation allowance angle Δθth.

When, as a result of the determination made in step S31, the first azimuth angle error is not less than the axis deviation allowance angle Δθth, that is, when the first azimuth angle error is greater than or equal to the axis deviation allowance angle Δθth (NO in step S31), the processing proceeds to step S20.

However, when, as a result of the determination made in step S31, the first azimuth angle error is less than the axis deviation allowance angle Δθth (YES in step S31), the azimuth angle error calculating unit 14 instructs the azimuth angle error storing unit 18 to store the first azimuth angle error. Thereafter, the processing proceeds to a step of detecting an azimuth angle error caused by a change in antenna characteristics. That is, the processing proceeds to step S21. After the processes in step S21, step S22 and step S23 are sequentially performed, the processing proceeds to step S32.

In step S32, the azimuth angle error comparing unit 19 reads the first azimuth angle error in the azimuth angle error storing unit 18. The azimuth angle error comparing unit 19 calculates the difference between the second azimuth angle error calculated in step S23 and the first azimuth angle error and determines whether the absolute value of the difference is less than a predetermined reference value.

When, as a result of the determination made in step S32, the absolute value is less than the reference value (YES in step S32), the azimuth angle error comparing unit 19 determines that no change in the antenna characteristics has occurred in the radar apparatus 200. In this case, the series of processes is completed.

When, as a result of the determination made in step S32, the absolute value is not less than the reference value, that is, when the absolute value is greater than or equal to the reference value (NO in step S32), the azimuth angle error comparing unit 19 determines that a change in the antenna characteristics has occurred in the radar apparatus 200 and outputs the second azimuth angle error to the table updating unit 16 (step S25).

The example of the operation performed by the radar apparatus 200 has been described above.

While the exemplary embodiments of the present disclosure have been described, the present disclosure is not limited to the above exemplary embodiments. Various modifications can be made to the exemplary embodiments. Summary of Exemplary Embodiments

According to a first aspect of the present disclosure, a radar apparatus mounted on a moving body includes a detection unit that detects an azimuth angle of a reflection point of at least one target located in a scan range of a radar signal on the basis of a correspondence between a phase difference among a plurality of antennas and an azimuth angle and a phase difference observed in the scan range among the plurality of antennas, a calculation unit that selects, on the basis of the detected azimuth angle, at least one reflection point located in a second range that differs from a first range including a central axis on which the phase difference among the antennas is zero and calculates a second azimuth angle error on the basis of the azimuth angle of the at least one selected reflection point and a true value of the azimuth angle of the selected reflection point, and a correction unit that corrects the correspondence on the basis of the observed phase difference among the antennas and the second azimuth angle error.

According to a second aspect of the present disclosure, the radar apparatus mounted on a moving body according to the first aspect updates a table indicating the correspondence on the basis of the observed phase difference among the antennas and the second azimuth angle error.

According to a third aspect of the present disclosure, in the radar apparatus mounted on the moving body according to the first or second aspect, the calculation unit selects a reflection point located in the first range of the scan range on the basis of the detected azimuth angle and calculates a first azimuth angle error on the basis of the azimuth angle of the selected reflection point and the true value of the azimuth angle of the selected reflection point.

According to a fourth aspect of the present disclosure, in the radar apparatus mounted on a moving body according to the third aspect, the detection unit outputs an azimuth angle corrected by adding a predetermined correction value to the detected azimuth angle, and the calculation unit selects one of the reflection point located in the first range and the reflection point located in the second range on the basis of the corrected azimuth angle.

According to a fifth aspect of the present disclosure, in the radar apparatus mounted on the moving body according to the fourth aspect, the calculation unit selects the reflection point located in the second range when the first azimuth angle error is less than a first reference value, and the calculation unit sets a new correction value on the basis of the predetermined correction value and the first azimuth angle error when the first azimuth angle error is greater than or equal to the first reference value.

According to a sixth aspect of the present disclosure, in the radar apparatus mounted on the moving body according to the fifth aspect, when an absolute value of the new correction value is greater than or equal to a first axis deviation allowance angle, the calculation unit outputs a signal indicating a warning to an occupant of the moving body or a signal instructing stoppage of scanning by the radar signal.

According to a seventh aspect of the present disclosure, in the radar apparatus mounted on a moving body according to any one of the fourth to sixth aspects, when the second azimuth angle error is greater than or equal to a second reference value, the correction unit updates the table.

According to an eighth aspect of the present disclosure, in the radar apparatus mounted on the moving body according to the third aspect, the calculation unit selects a reflection point located in the second range when the first azimuth angle error is less than a first axis deviation allowance angle, and the calculation unit outputs a signal indicating a warning to an occupant of the moving body or a signal instructing stoppage of scanning by the radar signal when the first azimuth angle error is greater than or equal to the first axis deviation allowance angle.

According to a ninth aspect of the present disclosure, in the radar apparatus mounted on the moving body according to the eighth aspect, when an absolute value of a difference between the second azimuth angle error and the first azimuth angle error is greater than or equal to a third reference value, the correction unit updates the table.

According to a tenth aspect of the present disclosure, in a radar apparatus mounted on a moving body according to any one of the first to eighth aspects, when the at least one reflection point selected in the second range comprises a plurality of reflection points, the calculation unit calculates the second azimuth angle error for each of the selected reflection points, and the correction unit corrects the correspondence on the basis of the phase difference observed for each of the reflection points among antennas and the second azimuth angle error calculated for each of the reflection points.

According to an eleventh aspect of the present disclosure, in the radar apparatus mounted on the moving body according to the tenth aspect, when one or more targets are continuously present in the scan range, the calculation unit selects the plurality of reflection points.

According to a twelfth aspect of the present disclosure, in the radar apparatus mounted on a moving body according to any one of the first to tenth aspects, the calculation unit receives, from an image pickup apparatus that captures an image of the scan range within a predetermined distance from the moving body, the true value of the azimuth angle of the reflection point extracted by the image pickup apparatus, a central axis of the imaging range of the image pickup apparatus coincides with a central axis of the scan range, and the imaging range includes a region corresponding to a half of a maximum detected azimuth angle of the scan range.

According to a thirteenth aspect of the present disclosure, a method for correcting an azimuth angle for use in a radar apparatus mounted on a moving body is provided. The method includes detecting an azimuth angle of a reflection point of at least one target located in a scan range of a radar signal on the basis of a correspondence between a phase difference among a plurality of antennas and an azimuth angle and a phase difference observed in the scan range among the plurality of antennas, selecting, on the basis of the detected azimuth angle, at least one reflection point located in a second range that differs from a first range including a central axis on which the phase difference among the antennas is zero and calculating a second azimuth angle error on the basis of the azimuth angle of the at least one selected reflection point and a true value of the azimuth angle of the selected reflection point, and correcting the correspondence on the basis of the observed phase difference among the antennas and the second azimuth angle error.

The present disclosure can be realized by software, hardware, or software that works with hardware.

Some or all of the functional blocks used in the description of the above exemplary embodiments may be achieved as an LSI, which is an integrated circuit, and some or all of the processes described in the above exemplary embodiments may be controlled by a single LSI or a combination of LSIs. The LSI may be formed from the individual chips or may be formed from a single chip so as to include some or all of the functional blocks. The LSI may be provided with data input and output An LSI may be called an IC, a system LSI, a super LSI, or an ultra LSI depending on the degree of integration. The method of forming an integrated circuit is not limited to formation of an LSI. The integrated circuit may be achieved by using a dedicated circuit, a general purpose processor, or a dedicated processor.

Alternatively, a field programmable gate array (FPGA), which can be programmed after LSI fabrication, or a reconfigurable processor, which allows reconfiguration of connections and settings of circuit cells in LSI, may be used. The present disclosure may be implemented as digital processing or analog processing.

Moreover, should a circuit integration technology replacing LSI appear as a result of advancements in semiconductor technology or other technologies derived from the technology, the functional blocks could be integrated using such a technology. Another possibility is the application of biotechnology, for example.

The present disclosure may be used for a radar apparatus mounted on a moving body.

## Claims

1. A radar apparatus (100) mounted on a moving body comprising:
a signal transceiver (10) that receives one or more radar signals reflected by one or more reflection points of one or more targets located in a scan range (R1) with a plurality of antennas;
detection circuitry (11) that detects an azimuth angle of the one or more reflection points of the one or more targets on the basis of a correspondence between a phase difference among the plurality of antennas and a stored azimuth angle and wherein the phase difference being observed in the scan range among the plurality of antennas, the observed phase difference being determined on the basis of the one or more radar signals; and
**characterized by:**
a calculation circuitry that selects, on the basis of the detected azimuth angle, from the one or more reflection points one or more second reflection points located in a second range that differs from a first range including a central axis (A) on which the phase difference among the antennas is zero and calculates a second azimuth angle error on the basis of the azimuth angle of each of the one or more selected second reflection points and a true value of the azimuth angle of each of the one or more selected second reflection points, wherein the true value is input from a connected image pickup apparatus (3) external to the radar apparatus; and
correction circuitry (14) that corrects the correspondence on the basis of the observed phase difference among the antennas and the second azimuth angle error.

2. The radar apparatus according to Claim 1, wherein the correction circuitry updates a table indicating the correspondence on the basis of the observed phase difference among the antennas and the second azimuth angle error.

3. The radar apparatus according to Claim 1, wherein the calculation circuitry (14) selects from the one or more reflection points one or more first reflection points located in the first range of the scan range (R1) on the basis of the detected azimuth angle and
calculates a first azimuth angle error on the basis of the azimuth angle of the one or more selected first reflection points and the true value of the azimuth angle of the one or more selected first reflection points.

4. The radar apparatus according to Claim 3, wherein the detection circuitry outputs an azimuth angle corrected by adding a determined correction value to the detected azimuth angle, and the calculation circuitry selects one or more first reflection points and the one or more second reflection points, on the basis of the corrected azimuth angle.

5. The radar apparatus according to Claim 4, wherein the calculation circuitry selects the one or more second reflection points when the first azimuth angle error is less than a first reference value, and
wherein the calculation circuitry sets a new correction value on the basis of the determined correction value and the first azimuth angle error when the first azimuth angle error is greater than or equal to the first reference value.

6. The radar apparatus according to Claim 5, wherein when an absolute value of the new correction value is greater than or equal to a first axis deviation allowance angle, the calculation circuitry outputs a signal indicating a warning to an occupant of the moving body or a signal instructing stoppage of scanning by the radar signal.

7. The radar apparatus according to Claim 4, wherein when the second azimuth angle error is greater than or equal to a second reference value, the correction circuitry updates the table.

8. The radar apparatus according to Claim 3, wherein when the first azimuth angle error is less than a first axis deviation allowance angle, the calculation circuitry selects one or more second reflection points, and
wherein when the first azimuth angle error is greater than or equal to the first axis deviation allowance angle, the calculation circuitry outputs a signal indicating a warning to an occupant of the moving body or a signal instructing stoppage of scanning by the radar signal.

9. The radar apparatus according to Claim 8, wherein when an absolute value of a difference between the second azimuth angle error and the first azimuth angle error is greater than or equal to a third reference value, the correction circuitry updates the table.

10. The radar apparatus according to Claim 1, wherein when the one or more second reflection points selected in the second range comprise a plurality of second reflection points, the calculation circuitry calculates the second azimuth angle error for each of the plurality of selected second reflection points, and the correction circuitry corrects the correspondence on the basis of the phase difference observed for each of the plurality of selected second reflection points among antennas and the second azimuth angle error calculated for each of the plurality of selected second reflection points.

11. The radar apparatus according to Claim 10, wherein when the one or more targets are continuously present in the scan range, the calculation circuitry selects the plurality of second reflection points.

12. The radar apparatus according to Claim 1, wherein the calculation circuitry receives, from an image pickup apparatus that captures one or more images of the scan range within a determined distance from the moving body, the true value of the azimuth angle of the one or more second reflection points extracted by the image pickup apparatus, and
wherein a central axis of the imaging range of the image pickup apparatus coincides with a central axis of the scan range, and the imaging range includes a region corresponding to a half of a maximum detected azimuth angle of the scan range.

13. A method for correcting an azimuth angle for use in a radar apparatus (100) mounted on a moving body, comprising:
receiving one or more radar signals reflected by one or more reflection points of one or more targets located in a scan range (R1) with a plurality of antennas;
detecting an azimuth angle of one or more reflection points of the one or more targets on the basis of a correspondence between a phase difference among the plurality of antennas and a stored azimuth angle and wherein the phase difference being observed in the scan range among the plurality of antennas, the observed phase difference being determined on the basis of the one or more radar signals; and
**characterized by:**
selecting, on the basis of the detected azimuth angle, from the one or more reflection points one or more second reflection points located in a second range that differs from a first range including a central axis (A) on which the phase difference among the antennas is zero and calculating a second azimuth angle error on the basis of the azimuth angle of the one or more selected second reflection points and a true value of the azimuth angle of the one or more selected second reflection points, wherein the true value is input from a connected image pickup apparatus (3) external to the radar apparatus; and
correcting the correspondence on the basis of the observed phase difference among the antennas and the second azimuth angle error.

## Patentansprüche

1. Radar-Vorrichtung (100), die an einem sich bewegenden Körper installiert ist, wobei sie umfasst:
eine Signal-Sendeempfangseinrichtung (10), die ein oder mehrere Radar-Signal/e, das/die von einem oder mehreren Reflexions-Punkt/en eines oder mehrerer Ziels/Ziele reflektiert wird/werden, das/die sich in einem Abtast-Bereich (R1) befindet/befinden, mit einer Vielzahl von Antennen empfängt;
eine Erfassungs-Schaltung (11), die einen Azimutwinkel des einen oder der mehreren Reflexions-Punktes/Punkte auf Basis einer Entsprechung zwischen einer Phasendifferenz der Vielzahl von Antennen und einem gespeicherten Azimutwinkel erfasst, wobei die Phasendifferenz in dem Abtast-Bereich zwischen der Vielzahl von Antennen beobachtet wird und die beobachtete Phasendifferenz auf Basis des einen oder der mehreren Radar-Signals/Signale bestimmt wird; und
**gekennzeichnet durch:**
eine Berechnungs-Schaltung, die auf Basis des erfassten Azimutwinkels aus dem einen oder den mehreren Reflexions-Punkt/en einen oder mehrere zweite Reflexions-Punkt/e auswählt, der/die sich in einem zweiten Bereich befindet/befinden, der sich von einem ersten Bereich unterscheidet, der eine Mittelachse (A) einschließt, auf der die Phasendifferenz zwischen den Antennen 0 beträgt, und die einen zweiten Azimutwinkel-Fehler auf Basis des Azimutwinkels jedes von dem einen oder den mehreren ausgewählten zweiten Reflexions-Punkt/en sowie eines tatsächlichen Wertes des Azimutwinkels jedes von dem einen oder den mehreren ausgewählten zweiten Reflexions-Punkt/en berechnet, wobei der tatsächliche Wert von einer verbundenen Bildaufnahme-Vorrichtung (3) außerhalb der Radar-Vorrichtung eingegeben wird; sowie
eine Korrektur-Schaltung (14), die Entsprechung auf Basis der beobachteten Phasendifferenz zwischen den Antennen und des zweiten Azimutwinkel-Fehlers korrigiert.

2. Radar-Vorrichtung nach Anspruch 1, wobei die Korrektur-Schaltung eine Tabelle, die die Entsprechung angibt, auf Basis der beobachteten Phasendifferenz zwischen den Antennen und des zweiten Azimutwinkel-Fehlers aktualisiert.

3. Radar-Vorrichtung nach Anspruch 1, wobei die Berechnungs-Schaltung (14) aus dem einen oder den mehreren Reflexions-Punkt/en einen oder mehrere ersten/erste Reflexions-Punkt/e, der/die sich in dem ersten Bereich des Abtast-Bereiches (R1) befindet/befinden, auf Basis des erfassten Azimutwinkels auswählt und einen ersten Azimutwinkel-Fehler auf Basis des Azimutwinkels des einen oder der mehreren ausgewählten ersten Reflexions-Punktes/Punkte sowie des tatsächlichen Wertes des Azimutwinkels des einen oder der mehreren ausgewählten ersten Reflexions-Punktes/Punkte berechnet.

4. Radar-Vorrichtung nach Anspruch 3, wobei die Erfassungs-Schaltung einen Azimutwinkel ausgibt, der durch Addieren eines vorgegebenen Korrektur-Wertes zu dem erfassten Azimutwinkel korrigiert wurde, und die Berechnungs-Schaltung einen oder mehrere ersten/erste Reflexions-Punkt/e sowie den einen oder die mehreren zweiten Reflexions-Punkt/Punkte auf Basis des korrigierten Azimutwinkels auswählt.

5. Radar-Vorrichtung nach Anspruch 4, wobei die Berechnungs-Schaltung den einen oder die mehreren zweiten Reflexions-Punkt/e auswählt, wenn der erste Azimutwinkel-Fehler kleiner ist als ein erster Bezugs-Wert, und
die Berechnungs-Schaltung einen neuen Korrektur-Wert auf Basis des bestimmten Korrektur-Wertes sowie des ersten Azimutwinkel-Fehlers festlegt, wenn der erste Azimutwinkel-Fehler größer ist als oder genauso groß wie der erste Bezugs-Wert.

6. Radar-Vorrichtung nach Anspruch 5, wobei, wenn ein Absolut-Wert des neuen Korrektur-Wertes größer ist als oder genauso groß wie ein erster Achsenabweichungs-Toleranzwinkel, die Berechnungs-Schaltung ein Signal, das eine Warnung anzeigt, an einen Insassen des sich bewegenden Körpers ausgibt, oder ein Signal ausgibt, das Unterbrechung von Abtasten mit dem Radar-Signal anweist.

7. Radar-Vorrichtung nach Anspruch 4, wobei, wenn der zweite Azimutwinkel-Fehler größer ist als oder genauso groß wie ein zweiter Bezugs-Wert, die Korrektur-Schaltung die Tabelle aktualisiert.

8. Radar-Vorrichtung nach Anspruch 3, wobei, wenn der erste Azimutwinkel-Fehler kleiner ist als ein erster Achsenabweichungs-Toleranzwinkel, die Berechnungs-Schaltung einen oder mehrere zweiten/zweite Reflexions-Punkt/e auswählt, und
wenn der erste Azimutwinkel-Fehler größer ist als oder genauso groß wie der erste Achsenabweichungs-Toleranzwinkel, die Berechnungs-Schaltung ein Signal, das eine Warnung anzeigt, an einen Insassen des sich bewegenden Körpers ausgibt, oder ein Signal ausgibt, das Unterbrechung von Abtasten mit dem Radar-Signal anweist.

9. Radar-Vorrichtung nach Anspruch 8, wobei, wenn ein Absolut-Wert einer Differenz zwischen dem zweiten Azimutwinkel-Fehler und dem ersten Azimutwinkel-Fehler größer ist als oder genauso groß wie ein dritter Bezugs-Wert, die Korrektur-Schaltung die Tabelle aktualisiert.

10. Radar-Vorrichtung nach Anspruch 1, wobei, wenn der eine oder die mehreren zweite/n Reflexions-Punkt/e, der/die in dem zweiten Bereich ausgewählt wird/werden, eine Vielzahl zweiter Reflexions-Punkte umfasst/umfassen, die Berechnungs-Schaltung den zweiten Azimutwinkel-Fehler für jeden der Vielzahl ausgewählter zweiter Reflexions-Punkte berechnet und die Korrektur-Schaltung die Korrespondenz auf Basis der für jeden der Vielzahl ausgewählter zweiter Reflexions-Punkte beobachteten Phasendifferenz zwischen den Antennen sowie des für jeden der Vielzahl ausgewählter zweite Reflexions-Punkte berechneten zweiten Azimutwinkel-Fehlers korrigiert.

11. Radar-Vorrichtung nach Anspruch 10, wobei, wenn das eine oder die mehreren Ziel/e kontinuierlich in dem Abtast-Bereich präsent ist/sind, die Berechnungs-Schaltung die Vielzahl zweiter Reflexions-Punkte auswählt.

12. Radar-Vorrichtung nach Anspruch 1, wobei die Berechnungs-Schaltung von einer Bildaufnahme-Vorrichtung, die ein oder mehrere Bild/er des Abtast-Bereiches innerhalb eines vorgegebenen Abstandes zu dem sich bewegenden Körper aufnimmt, den durch die Bildaufnahme-Vorrichtung extrahierten tatsächlichen Wert des Azimutwinkels des einen oder der mehreren zweiten Reflexions-Punktes/Punkte empfängt, und
eine Mittelachse des Bilderzeugungs-Bereiches der Bildaufnahme-Vorrichtung sich mit einer Mittelachse des Abtast-Bereiches liegt und der Bilderzeugungs-Bereich eine Zone einschließt, die einer Hälfte eines maximal erfassten Azimutwinkels des Abtast-Bereiches entspricht.

13. Verfahren zum Korrigieren eines Azimutwinkels zum Einsatz in einer an einem sich bewegenden Körper installierten Radar-Vorrichtung (100), das umfasst:
Empfangen eines oder mehrerer Radar-Signals/Signale, das/die von einem oder mehreren Reflexions-Punkt/en eines oder mehrerer Ziels/Ziele reflektiert wird/werden, das/die sich in einem Abtast-Bereich (R1) befindet/befinden, mit einer Vielzahl von Antennen;
Erfassen eines Azimutwinkels eines oder mehrerer Reflexions-Punktes/Punkte auf Basis einer Entsprechung zwischen einer Phasendifferenz der Vielzahl von Antennen und einem gespeicherten Azimutwinkel, wobei die Phasendifferenz in dem Abtast-Bereich zwischen der Vielzahl von Antennen beobachtet wird und die beobachtete Phasendifferenz auf Basis des einen oder der mehreren Radar-Signals/Signale bestimmt wird; und
**gekennzeichnet durch:**
Auswählen eines oder mehrerer zweiter Reflexions-Punktes/Punkte, der/die sich in einem zweiten Bereich befindet/befinden, der sich von einem ersten Bereich unterscheidet, der eine Mittelachse (A) einschließt, auf der die Phasendifferenz zwischen den Antennen 0 beträgt, aus dem einen oder den mehreren Reflexions-Punkt/en auf Basis des erfassten Azimutwinkels und Berechnen eines zweiten Azimutwinkel-Fehlers auf Basis des Azimutwinkels des einen oder der mehreren ausgewählten zweiten Reflexions-Punktes/Punkten sowie eines tatsächlichen Wertes des Azimutwinkels des einen oder der mehreren ausgewählten zweiten Reflexions-Punktes/Punkten, wobei der tatsächliche Wert von einer verbundenen Bildaufnahme-Vorrichtung (3) außerhalb der Radar-Vorrichtung eingegeben wird; sowie
Korrigieren der Entsprechung auf Basis der beobachteten Phasendifferenz zwischen den Antennen und des zweiten Azimutwinkel-Fehlers.

## Revendications

1. Appareil radar (100) monté sur un corps en mouvement comprenant :
un émetteur-récepteur de signal (10) qui reçoit un ou plusieurs signaux radar réfléchis par un ou plusieurs points de réflexion d'une ou plusieurs cibles situées dans une plage de balayage (R1) à l'aide d'une pluralité d'antennes ;
un circuit de détection (11) qui détecte un angle d'azimut des un ou plusieurs points de réflexion des une ou plusieurs cibles sur la base d'une correspondance entre une différence de phase parmi la pluralité d'antennes et un angle d'azimut mémorisé et dans lequel la différence de phase est observée dans la plage de balayage parmi la pluralité d'antennes, la différence de phase observée étant déterminée sur la base des un ou plusieurs signaux radar ; et
**caractérisé par** :
un circuit de calcul qui sélectionne, sur la base de l'angle d'azimut détecté, parmi les un ou plusieurs points de réflexion, un ou plusieurs seconds points de réflexion situés dans une seconde plage qui diffère d'une première plage comprenant un axe central (A) sur lequel la différence de phase parmi les antennes est nulle et calcule une seconde erreur d'angle d'azimut sur la base de l'angle d'azimut de chacun des un ou plusieurs seconds points de réflexion sélectionnés et d'une valeur réelle de l'angle d'azimut de chacun des un ou plusieurs seconds points de réflexion sélectionnés, dans lequel la valeur réelle est entrée depuis un appareil de prise de vues connecté (3) externe à l'appareil radar ; et
un circuit de correction (14) qui corrige la correspondance sur la base de la différence de phase observée parmi les antennes et de la seconde erreur d'angle d'azimut.

2. Appareil radar selon la revendication 1, dans lequel le circuit de correction met à jour une table indiquant la correspondance sur la base de la différence de phase observée parmi les antennes et de la seconde erreur d'angle d'azimut.

3. Appareil radar selon la revendication 1, dans lequel le circuit de calcul (14) sélectionne parmi les un ou plusieurs points de réflexion un ou plusieurs premiers points de réflexion situés dans la première plage de la plage de balayage (R1) sur la base de l'angle d'azimut détecté et calcule une première erreur d'angle d'azimut sur la base de l'angle d'azimut des un ou plusieurs premiers points de réflexion sélectionnés et de la valeur réelle de l'angle d'azimut des un ou plusieurs premiers points de réflexion sélectionnés.

4. Appareil radar selon la revendication 3, dans lequel le circuit de détection délivre en sortie un angle d'azimut corrigé en ajoutant une valeur de correction déterminée à l'angle d'azimut détecté, et le circuit de calcul sélectionne un ou plusieurs premiers points de réflexion et les un ou plusieurs seconds points de réflexion, sur la base de l'angle d'azimut corrigé.

5. Appareil radar selon la revendication 4, dans lequel le circuit de calcul sélectionne les un ou plusieurs seconds points de réflexion lorsque la première erreur d'angle d'azimut est inférieure à une première valeur de référence, et
dans lequel le circuit de calcul établit une nouvelle valeur de correction sur la base de la valeur de correction déterminée et de la première erreur d'angle d'azimut lorsque la première erreur d'angle d'azimut est supérieure ou égale à la première valeur de référence.

6. Appareil radar selon la revendication 5, dans lequel, lorsqu'une valeur absolue de la nouvelle valeur de correction est supérieure ou égale à un premier angle de tolérance de déviation d'axe, le circuit de calcul délivre en sortie un signal indiquant un avertissement à un occupant du corps en mouvement ou un signal ordonnant l'arrêt du balayage par le signal radar.

7. Appareil radar selon la revendication 4, dans lequel, lorsque la seconde erreur d'angle d'azimut est supérieure ou égale à une deuxième valeur de référence, le circuit de correction met à jour la table.

8. Appareil radar selon la revendication 3, dans lequel, lorsque la première erreur d'angle d'azimut est inférieure à un premier angle de tolérance de déviation d'axe, le circuit de calcul sélectionne un ou plusieurs seconds points de réflexion, et
dans lequel, lorsque la première erreur d'angle d'azimut est supérieure ou égale au premier l'angle de tolérance de déviation d'axe, le circuit de calcul délivre en sortie un signal indiquant un avertissement à un occupant du corps en mouvement ou un signal ordonnant l'arrêt du balayage par le signal radar.

9. Appareil radar selon la revendication 8, dans lequel lorsqu'une valeur absolue d'une différence entre la seconde erreur d'angle d'azimut et la première erreur d'angle d'azimut est supérieure ou égale à une troisième valeur de référence, le circuit de correction met à jour la table.

10. Appareil radar selon la revendication 1, dans lequel, lorsque les un ou plusieurs seconds points de réflexion sélectionnés dans la seconde plage comprennent une pluralité de seconds points de réflexion, le circuit de calcul calcule la seconde erreur d'angle d'azimut pour chacun de la pluralité de seconds points de réflexion sélectionnés, et le circuit de correction corrige la correspondance sur la base de la différence de phase observée pour chacun de la pluralité de seconds points de réflexion sélectionnés parmi des antennes et de la seconde erreur d'angle d'azimut calculée pour chacun de la pluralité de seconds points de réflexion sélectionnés.

11. Appareil radar selon la revendication 10, dans lequel, lorsque les une ou plusieurs cibles sont présentes en continue dans la plage de balayage, le circuit de calcul sélectionne la pluralité de seconds points de réflexion.

12. Appareil radar selon la revendication 1, dans lequel le circuit de calcul reçoit, à partir d'un appareil de prise de vues qui capture une ou plusieurs images de la plage de balayage à une distance déterminée du corps en mouvement, la valeur réelle de l'angle d'azimut des un ou plusieurs seconds points de réflexion extraits par l'appareil de prise de vues, et
dans lequel un axe central de la plage d'imagerie de l'appareil de prise de vues coïncide avec un axe central de la plage de balayage, et la plage d'imagerie comprend une région correspondant à la moitié d'un angle d'azimut maximum détecté de la plage de balayage.

13. Procédé de correction d'un angle d'azimut destiné à être utilisé dans un appareil radar (100) monté sur un corps en mouvement, comprenant de :
recevoir un ou plusieurs signaux radar réfléchis par un ou plusieurs points de réflexion d'une ou plusieurs cibles situées dans une plage de balayage (R1) à l'aide d'une pluralité d'antennes ;
détecter un angle d'azimut des un ou plusieurs points de réflexion des une ou plusieurs cibles sur la base d'une correspondance entre une différence de phase parmi la pluralité d'antennes et un angle d'azimut mémorisé et dans lequel la différence de phase est observée dans la plage de balayage parmi la pluralité d'antennes, la différence de phase observée étant déterminée sur la base des un ou plusieurs signaux radar ; et
**caractérisé par** les étapes consistant à :
sélectionner, sur la base de l'angle d'azimut détecté, parmi les un ou plusieurs points de réflexion, un ou plusieurs seconds points de réflexion situés dans une seconde plage qui diffère d'une première plage comprenant un axe central (A) sur lequel la différence de phase parmi les antennes est égale à zéro et calculer une seconde erreur d'angle d'azimut sur la base de l'angle d'azimut des un ou plusieurs seconds points de réflexion sélectionnés et d'une valeur réelle de l'angle d'azimut des un ou plusieurs seconds points de réflexion sélectionnés, la valeur réelle étant entrée depuis un appareil de prise de vues connecté (3) externe à l'appareil radar ; et
corriger la correspondance sur la base de la différence de phase observée parmi les antennes et de la seconde erreur d'angle d'azimut.
